# EUROPÄISCHE PATENTSCHRIFT

(11) **EP 0 540 699 B1**
(45) Veröffentlichungstag und Bekanntmachung des Hinweises auf die Patenterteilung: **10.05.1995**
(21) Anmeldenummer: 92907144.7
(22) Anmeldetag: 01.04.1992
(51) Int. Cl.: A23L 1/16, F26B 21/08

(54) **VERFAHREN UND VORRICHTUNG ZUM FORMSTABILISIEREN VON TEIGWAREN**
PROCESS AND DEVICE FOR STABILIZING THE SHAPE OF PASTA
PROCEDE ET DISPOSITIF DE CONSOLIDATION DE PATES ALIMENTAIRES MOULEES

(30) Priorität: 03.04.1991 CH 988/91
(43) Veröffentlichungstag der Anmeldung: 12.05.1993
(73) Patentinhaber: BÜHLER AG, 9240 Uzwil (CH)
(72) Erfinder: MANSER, Josef, CH-9240 Uzwil (CH); EGGER, Friedrich, CH-9244 Niederuzwil (CH); SEILER, Werner, CH-9523 Züberwangen (CH)
(86) Internationale Anmeldenummer: CH9200060
(87) Internationale Veröffentlichungsnummer: WO9217074

(56) Entgegenhaltungen:
- EP-A- 0 129 892
- EP-A- 0 253 307
- WO-A-86/03654
- CH-A- 317 991
- FR-A- 437 357

## Beschreibung

Die Erfindung betrifft ein Verfahren zum Formstabilisieren von Teigwaren, wobei die Ware aus Teig von etwa 28 % - 35 % Wassergehalt formgepresst, auf höhere Temperaturen erwärmt, und auf weniger als 13 % getrocknet wird, zur Lagerung bei Raumtemperatur.

Die klassische Teigwaren-Trocknung basiert auf der bekannten Wärmelehre, wonach Wärme in drei Formen übertragbar ist:
- Strahlungswärme
- Konvektion durch Lufttransport
- Wärmeleitung (bei der Teigwarentrocknung nicht von Bedeutung)
Das konkrete Ziel ist ein optimaler Trocknungsvorgang. Dieser wird neben der Waren- und Lufttemperatur vor allem mit der Beziehung Wassergehalt der Ware und relativer Feuchtigkeit der Luft, gesteuert. Vorausgesetzt es besteht eine Differenz in der Gleichgewichtsfeuchtigkeit Ware-Luft, so geht der Trocknungsprozess umso schneller vor sich, je höher die Warentemperatur ist. Für jeden Laien liegt die Antwort aus der Erfahrung beim Abwaschen in der Küche schnell bereit, nämlich, dass die Trocknung bei möglichst hohen Temperaturen erfolgen soll, weil der Feuchtigkeitstransport bei höheren Temperaturen am schnellsten vor sich geht. Der Teigwarenfachmann weiss aber, dass er ohne Kontrolle und Einhaltung bewährter Bedingungen dabei nur Misserfolge erntet. Die jüngste Erfahrung zeigt, dass bei Temperaturen über 70°C, besonders über 80°C sehr präzise Kontrollen aller Trocknungsbedingungen notwendig sind. Mit grossen Versuchsreihen im Labor konnte sogar der Nachweis erbracht werden, dass gegen eine weitere Intensivierung des Trocknungsprozesses eine Art "Schallmauer" besteht. Wird diese überschritten, so kann zum Beispiel eine Ware, die in Bezug auf alle Qualitätskriterien ausgezeichnete Werte aufweist, unmittelbar nach der Trocknung auf den Tisch gelegt, ohne äussere Kräfte in viele Stücke zerbrechen. Das Zerbrechen geschieht zum Teil nach Minuten, teils aber nach Stunden oder Tagen.

Bekannt ist ein Verfahren zum Trocknen von Teigwaren gemäss der schweizerischen Patentschrift Nr. 317 991 zur Herstellung rissfreier Teigwaren. Das Verfahren ist dadurch gekennzeichnet, dass im Zusammenhang mit einer beschleunigten Trocknung die stärkerer Trocknung an der Oberfläche führt, eine Befeuchtung an der Gutoberfläche durchgeführt wird. Dies erfolgt mit Luft mit einer relativen Feuchtigkeit von 80 bis 100%. Die beschleunigte Trocknung erfolgt bei 70 bis 100°C mit einer Luft, die eine relative Feuchte von 50 bis 85% aufweist. Nachteilig ist hierbei jedoch, dass immerhin bis zu 4% Wasserzugabe, bezogen auf das Teigwarengewicht eingebracht wird, wobei mehrere Befeuchtungsvorgänge notwendig sein können.

Ein weiteres Verfahren zur Trocknung von Pasta, sowie eine dazugehörige Vorrichtung sind in der EP-A-253 307 offenbart. Hierbei werden die Teigwaren ebenfalls in einem Durchlauftrockner getrocknet und in mindestens einer Trocknungsstufe durch Besprühen mit Wasser oberflächig aufgefeuchtet. Konkrete Angaben werden jedoch nicht vermittelt.

Der Erfindung wurde die Aufgabe gestellt, das Verfahren so zu gestalten, dass bei hohen Temperaturen und kürzesten Trocknungszeiten keine "Nachschäden" entstehen und trotzdem in Bezug auf die Produktqualität, also energetisch und gesamtwirtschaftlich die beste Betriebsführung anwendbar ist. Die erfindungsgemässe Lösung ist dadurch gekennzeichnet, dass in der Endzone der Trocknung in noch warmen Zustand der Ware, der Wassergehalt der äusseren Schicht erhöht wird, insbesondere durch oberflächige Wasserzugabe. Tatsächlich treten selbst bei extremer Klimaführung bei den erfindungsgemäss getrockneten Teigwaren, und zwar bei Langwaren, genauso wie bei Kurzwaren, keinerlei "Nachschäden" auf.

Parallel, und mit gleichen Klimatas, aber ohne erfindungsgemässe Wasserzugabe behandelte Ware, ergab je nach Versuch einzelne Schäden bis zu ganz extremer Bruchware. Man kann dies auf grosse resp. extreme Spannungsdifferenzen innerhalb der Ware besonders in der Abkühlphase am Ende bzw. gegen das Ende der Trocknung hin zurückführen, weil die Oberfläche bei der traditionellen Trocknung stärker abgetrocknet wird als der Kern der Ware. Die Trocknung durch Verdampfung geht in der Endtrocknung, ganz besonders in der Abkühlzone so rasch vor sich, dass zuwenig Wasser aus dem Innern der Ware zu den äussersten Schichten nachströmen kann. Bekannt ist die intensive Wirkung des Verdampfungsvorganges, wenn Reinbenzin auf die Hand gebracht wird, wo die rasche Verdunstung der Hand Wärme entzieht, was als Kühlung spürbar ist. Im Falle der Teigware wird die Verdampfungswärme der Ware entzogen. Es entsteht eine Übertrocknung und ein Brüchigwerden der Rand-Schicht. Dadurch entsteht während der Abkühlung ein zeitlich verzögerter Schrumpfprozess des Kernes der Ware gegenüber den äusseren Schichten und somit die Bruchspannungen, denen die äusserste, nun zur Kruste gewordene Schicht, nicht mehr standhalten kann.

Eine gezielte Erhöhung des Wassergehaltes in der äusseren Schicht wirkt dagegen wie ein Polster, welches der Ware erlaubt , Feuchtigkeit und Temperatur innen und aussen gleichmässiger zu reduzieren. Es wird mit einer Wasserzugabe an der Oberfläche ein Spannungsausgleich besonders in der Abkühlphase geschaffen. Das Wasser dringt bei höheren Temperaturen sehr rasch in die Oberfläche ein und gibt der äussersten Schicht zudem ein plastisch bzw. elastisches Verhalten. Auf diese Weise ist es möglich geworden, eine Brüchigkeit und Rissbildung während der relativ kurzen Zeit der Temperaturabsenkung von zum Beispiel 90 °C auf 25 °C völlig zu vermeiden. Die Trocknung kann vorgängig bis unter den gewünschten Endwert geführt werden, so dass im Durchschnitt die Ware erst nach der Wasserzugabe wieder den gewünschten Endwassergehalt aufweist. Ein Kerngedanke der Erfindung liegt darin, dass nach Trocknung bei hoher Temperatur vorgängig einer raschen Temperatursenkung der Ware, diese oberflächig aufgefeuchtet wird.

Die Erfindung erlaubt verschiedene ganz besonders vorteilhafte weitere Ausgestaltungsgedanken. Es wird vorgeschlagen, auf die ganze Ware bezogen, 0,1 % bis 2 % bevorzugt wenigstens 0,4 % bis 1,2 % Wasser zuzugeben.

Beste Resultate werden auch bei sehr scharfer Trocknung erreicht, wenn die Wasserzugabe bei einer Warentemperatur von über 60 °C, bevorzugt sogar über 75 °C, erfolgt. Vorgängig werden lange Teigwaren nach dem Pressen in weniger als einer Stunde auf über 80 °C aufgeheizt und in 2 bis 4 Stunden auf hoher Temperatur auf etwa 13 % Feuchtigkeit getrocknet. Kurze Teigwaren wurden bei ähnlichen Klimatas in weniger als 30 Minuten auf über 80 °C aufgeheizt und in 1 bis 3 Stunden auf hoher Temperatur getrocknet.

Wesentlich ist ferner die Tatsache, dass die Wasserzugabe über einen kurzen Zeitraum von 1 bis 30 Minuten, bevorzugt 5 bis 10 Minuten erfolgt, damit ein relativ kleiner Prozentsatz von Wasser nur in die Oberfläche eindringt, und sich nicht über den ganzen Querschnitt verteilt, was die Trocknung verlängern würde. Nimmt man zum Beispiel an, dass das Wasser in der Wasserzugabezeit nur in eine Schicht von 1/10 der Warendicke, zum Beispiel eines Spaghettis eindringt, gibt 1 % Wasserzugabe an nur 1/10 der Ware eine Auffeuchtung von 10 %. Dies bedeutet, dass eine Ware, die auf zum Beispiel 12,5 % getrocknet wurde, nach der Wasserzugabe in der äussersten Schicht ein entsprechender Wassergehalt aufweist. Die Warentemperatur wird unmittelbar nach der Wasserzugabe auf unter 60 °C, bevorzugt auf unter 30 °C oder sogar auf Umgebungstemperatur, abgesenkt, im Falle der Wasserzugabe am Ende der Trocknung.

Bei besonders bruchgefährdeten Produkten, kann der Ware, nach der Haupttrocknung bzw. vor der Endtrocknung bei einer Warenfeuchtigkeit von wenig unter 15 %, während 5 bis 10 Minuten, zusätzlich oberflächig Wasser zugegeben werden. Hier erfolgt also eine zweimalige Wasserzugabe. Die Wasserzugabe kann durch Wasserdampf oder durch Wassernebel erfolgen.

Die Erfindung betrifft ferner eine Vorrichtung zum Formstabilisieren von Teigwaren, mit einer Teigpresse, einem kontinuierlich arbeitenden Tunneltrockner mit elementrespektiv zonenweise steuerbarem Klima, und ist dadurch gekennzeichnet, dass in der Endtrocknung, bevorzugt am Ende der Trocknung ein Wasserzugabeelement angeordnet ist. Besonders wichtig ist dabei, dass dem Auffeuchtelement Steuermittel zugeordnet sind, so dass die Wasserzugabe zeitlich beschränkt und Wassermenge sowie Klima genau unter Kontrolle behalten werden können.

Wesentlich ist ferner auch, dass das Wasserzugabeelement Mittel zur Erhaltung eines Klimas mit hoher Temperatur aufweist. Es kann je ein Auffeuchtelement am Anfang und am Ende der Endtrocknung angeordnet werden. Für eine optimale Steuerung des ganzen Trocknungsvorganges wird vorteilhafterweise am Beginn und am Ende des Endtrockners je eine Probeentnahmevorrichtung angeordnet.

In der Folge wird die Erfindung mit weiteren Einzelheiten an Hand einiger Ausführungsbeispiele erläutert.

Dabei zeigen:
- die Figur 1: eine Langwarentrocknung
- die Figur 2: eine Variante der Fig. 1
- die Figur 3: eine stufenweise Temperaturabsenkung bei Langwaren mit Wasserzugabe
- die Figur 4: eine Langwarentrocknung mit 2-maliger Wasserzugabe
- die Figur 5: eine Kurzwarentrocknung
- die Figur 6: ein einfaches Wasserzugabeelement
- die Figur 7: ein Wasserzugabeelement für höchste Anforderungen.

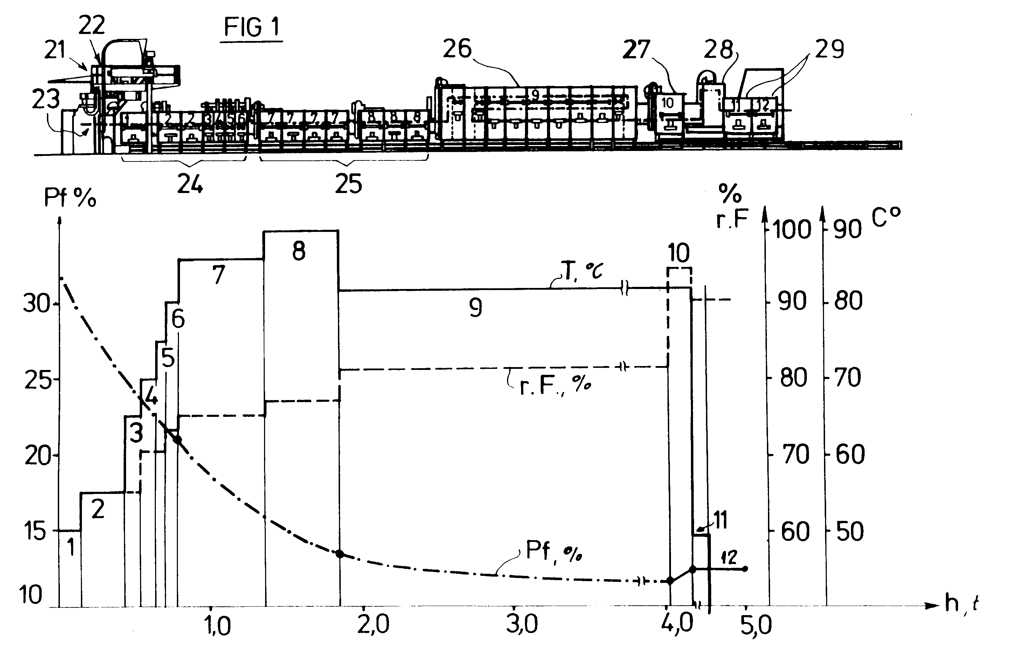

In der Folge wird nun auf die Figur 1 Bezug genommen, wobei in der unteren Bildhälfte diagrammatisch die Haupt-Trocknungsparameter und in der oberen Bildhälfte schematisch eine Teigwaren-Produktionslinie dargestellt ist.

Eine Langwarenpresse 21 ist auf einem Gestell 22 montiert. Die nicht dargestellten Langwaren durchlaufen nach einen Behänger 23 eine Aufheizzone 24 bestehend aus den Klimazonen 1 - 6. Ein Haupttrockner 25 besteht aus den Haupttrocknungszonen 7 und 8 und ein Endtrockner 26 enthält eine Klimazone 9. Nach dem Endtrockner 26 folgt ein Wasserzugabeelement 27 mit einer Klimazone 10, anschliessend folgt eine Klimaschleuse 28 und ein Kühler 29 mit Klimazonen 11 und 12.

Auf dem Diagramm ist mit einer ausgezogenen Linie die Lufttemperatur T, die rel. Feuchtigkeit der Luft r.F mit einer strichlierten Linie und der Wassergehalt der Ware resp. die Produktfeuchte Pf mit einer strichpunktierten Linie dargestellt.

Gemäss Diagramm der Figur 1 ist die Aufheizzone 24 in 6 verschiedene Klimazonen 1 bis 6 aufgeteilt. Der Haupttrockner 25 weist die beiden Klimas 7 und 8 auf. Nach der Klimazone 8 wird die Temperatur von etwa 90 °C auf etwa 82 °C abgesenkt, wobei die Produktfeuchtigkeit an dieser Stelle bereits auf unter 14 % reduziert ist. Anschliessend an den Haupttrockner 25 folgt der Endtrockner 26 in welchem die Temperatur konstant auf etwa 82 °C und die relative Luftfeuchtigkeit r.F bei ca. 80 % gehalten wird (Klimazone 9). Im Wasserzugabeelement 27 erfolgt eine leichte Auffeuchtung der Ware in einem Klima von zum Beispiel 70 °C und 95 % rel. Feuchtigkeit (Klimazone 10). Nach der Klimaschleuse 28 folgt der Kühler 29. In der ersten Kühlzone 11 wird die Temperatur auf unter 50 °C und in einer zweiten Kühlzone 12 auf wenig über Raumtemperatur abgesenkt.

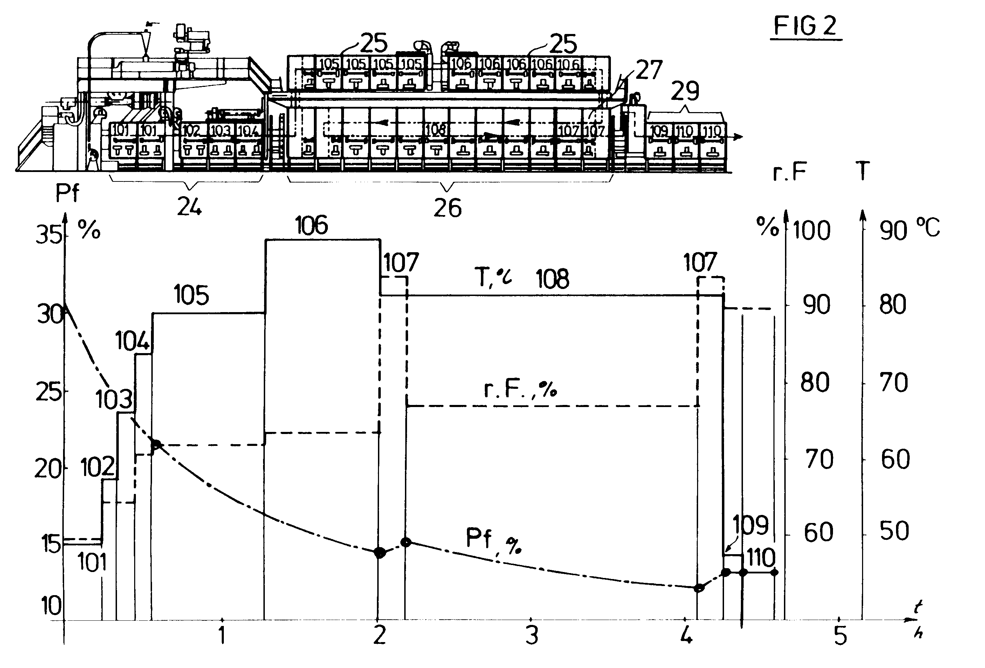

In Figur 2 wird eine andere Behandlungsart dargestellt. Die Aufheizzone 24 ist in 4 Klimazonen 101 bis 104 aufgeteilt. Der Haupttrockner 25 besteht aus den Klimazonen 105 und 106. Im Endtrockner 26 ist ein Wasserzugabeelement 27 angeordnet, Klimazone 107. Dieses Wasserzugabeelement 27 besorgt eine Wasserzugabe zu Beginn und am Ende der Endtrocknung. Kühler 29 hat die gleiche Funktion wie in Fig. 1 beschrieben, ebenfalls mit 2 Klimazonen 109 und 110, wobei die zweite Klimazone 110 im Diagramm nicht vollständig dargestellt ist.

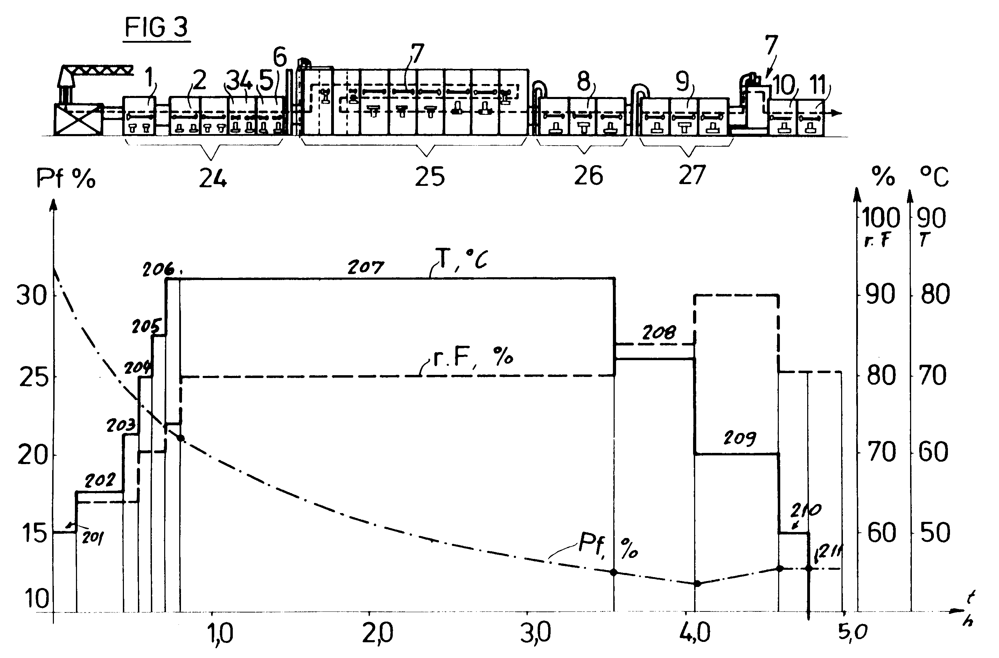

Die Figur 3 zeigt eine weitere interessante Ausgestaltung. Dabei wird die Temperatur der Ware stufenweise in Temperaturabsenkzonen 208, 209, 210 und 211 von etwa 80 °C auf etwa 40 - 30 °C abgesenkt. Die Wasserzugabe erfolgt in Zone 209 resp. bei einer Temperatur um 60°C.

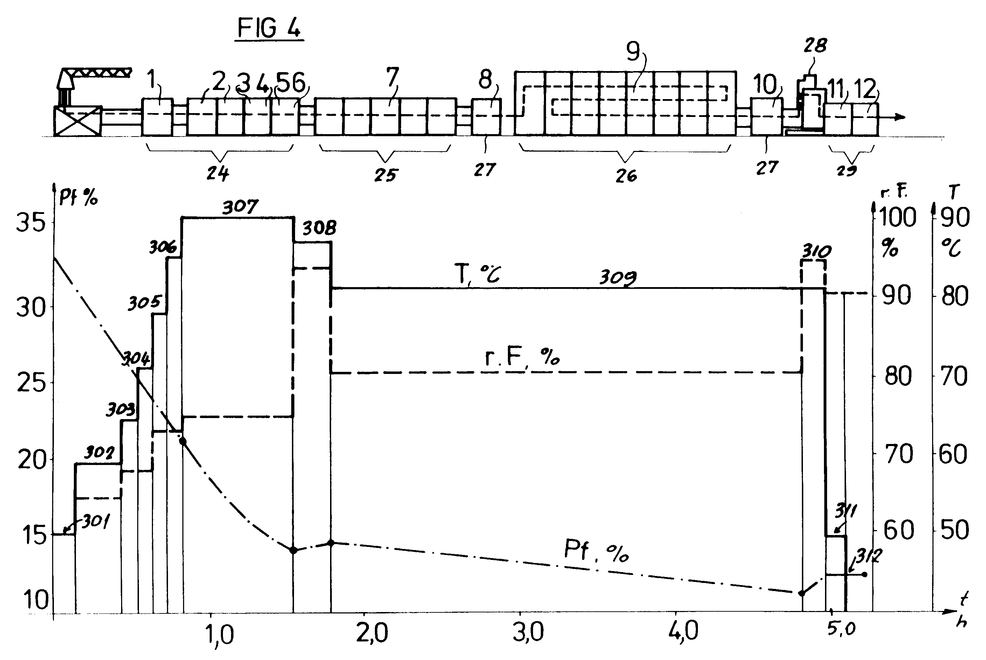

Die Figur 4 zeigt zwei getrennte Wasserzugabeelemente 27 (Klimazonen 308 und 310) unmittelbar nach der Haupttrocknung und vor dem Kühler 29 mit Klimazonen 311 und 312.

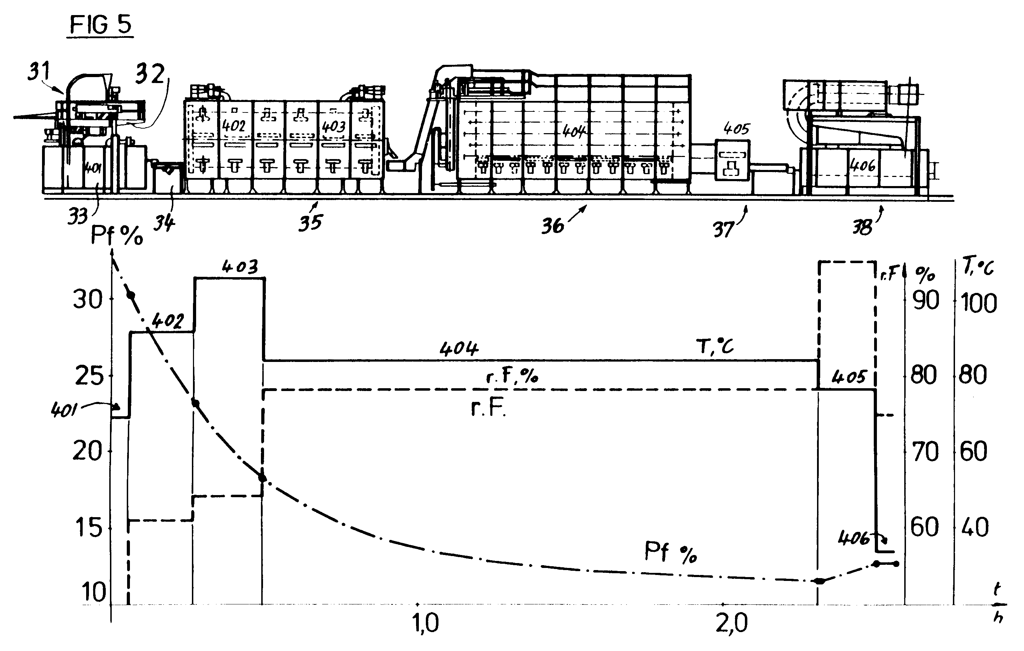

Die Figur 5 zeigt eine Produktions-Linie für Kurzwaren. Die Presse 31, welche auf dem Gestell 32 steht, übergibt die geschnittenen Kurzwaren direkt einem Vortrockner 33 ( Klimazone 401), von wo sie über ein Schüttlerelement 34 in einen Trommeltrockner 35 eingetragen werden (Klimazonen 402 und 403). Von einem Trommeltrockner 35 wird die Ware in einen Kurzwaren-Endtrockner 36 (Klimazone 404) überhoben und nach dem Austritt aus dem Endtrockner 36 in ein Kurzwaren-Wasserzugabeelement 37 (Klimazone 405) überführt, von welchem sie einem Kühler 38 (Klimazone 406) übergeben wird.

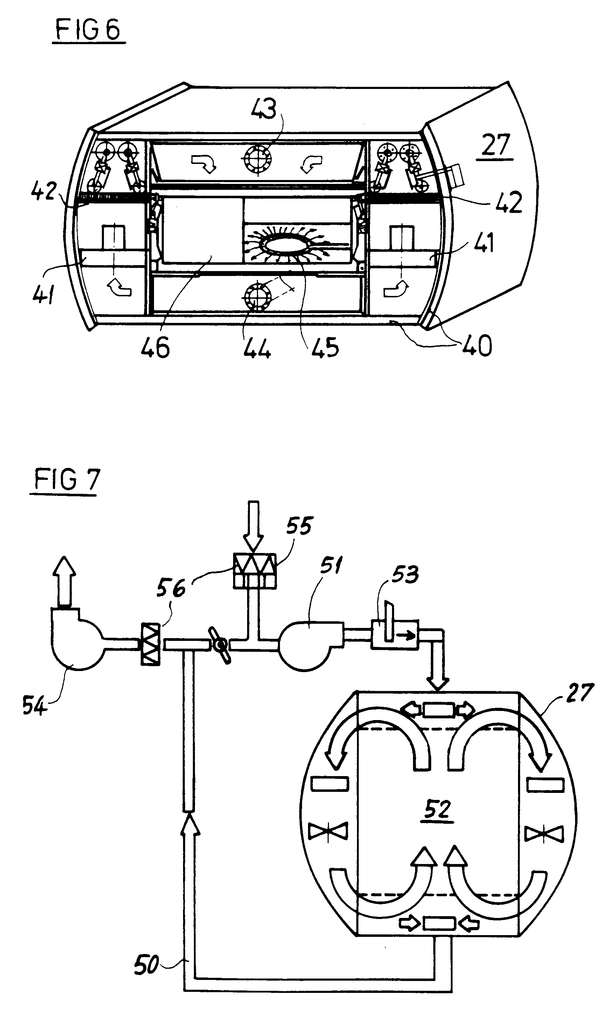

In der Figur 6 ist ein Wasserzugabeelement 27 dargestellt. In einen mit Platten 40 isolierten Gehäuse befinden sich die für die Klimaaufbereitung erforderlichen Elemente wie Ventilatoren 41, Heizelemente 42, Frischluft- und Abluftleitungen 43 und 44 sowie eine Ringleitung 45 für die Zufuhr des für die Befeuchtung der Luft erforderlichen Wassers oder Dampfes in dem Behandlungsraum 46.

Figur 7 zeigt schematisch das Wasserzugabeelement 27 mit einem zusätzlichen äusseren Luftaufbereitungssystem 50, dem sogenannten Turbosystem. Mit diesem System wird durch einen Ventilator 51 eine bestimmte Luftmenge ausserhalb des Behandlungsraumes 52 geführt und in einer Befeuchtungsstrecke 53 aufbereitet. Zum Turbosystem gehört ferner ein Abluftventilator 54 sowie ein Heizelement für Frischluft 55 mit den erforderlichen Regelklappen 56.

## Patentansprüche

1. Verfahren zum Formstabilisieren von Teigwaren, wobei die Ware aus Teig von etwa 28% - 35% Wassergehalt formgepresst, auf höhere Temperaturen erwärmt, und auf weniger als 13% getrocknet wird,
**dadurch gekennzeichnet**,
dass in der Endzone der Trocknung in noch warmem Zustand der Ware der Wassergehalt der äusseren Schicht auf die ganze Ware bezogen wenigstens 0,1%, höchstens 2%, bevorzugt 0,4% - 1,2% Wasser durch oberflächige Wasserzugabe erhöht, und die Temperatur der Ware unmittelbar nach der Wasserzugabe auf unter 60°, bevorzugt auf unter 30°C abgesenkt und die Temperatur des, die Waren umgebenden Klimas abgesenkt wird, zur Schaffung eines Auffeuchtklimas.

2. Verfahren nach Patentanspruch 1,
**dadurch gekennzeichnet**,
dass die Wasserzugabe bei einer Warentemperatur von bevorzugt über 45°C, ganz besonders bevorzugt von über 75°C erfolgt.

3. Verfahren nach Patentanspruch 1 oder 2,
**dadurch gekennzeichnet**,
dass lange Teigwaren in weniger als 1 Stunde auf über 80°C aufgeheizt und in 2 - 4 Stunden auf hoher Temperatur getrocknet werden.

4. Verfahren nach Patentanspruch 1 bis 3,
**dadurch gekennzeichnet**,
dass kurze Teigwaren in weniger als 30 Minuten auf über 80°C aufgeheizt und in 1 - 3 Stunden auf hoher Temperatur getrocknet werden.

5. Verfahren nach Patentanspruch 1 bis 4,
**dadurch gekennzeichnet**,
dass die Wasserzugabe über einen Zeitraum von 1 Minute bis 30 Minuten, bevorzugt 5 - 10 Minuten erfolgt.

6. Verfahren nach Patentanspruch 1,
**dadurch gekennzeichnet**,
dass die Wasserzugabe vor der Endtrocknung bei weniger als 18% Warenfeuchtigkeit erfolgt.

7. Verfahren nach Patentanspruch 1,
**dadurch gekennzeichnet**,
dass der Ware nach der Haupttrocknung bei einer Warenfeuchtigkeit von unter 15% während 5 - 10 Minuten oberflächig Wasser zugegeben wird.

8. Verfahren nach Patentanspruch 1,
**dadurch gekennzeichnet**,
dass die Wasserzugabe durch Wasserdampf oder Wassernebel über Umluft erfolgt, wobei bevorzugt das Klima bei Eintritt in die Zone der Wasserzugabe über 80% r.F. (relative Feuchtigkeit) bei einer Temperatur von über 60°C ist.

9. Vorrichtung zum Formstabilisieren von Teigwaren, mit einer Teigpresse, einem kontinuierlichen Durchlauftrockner mit element- resp. zonenweise steuerbarem Klima
**dadurch gekennzeichnet**,
dass in der Endtrocknung, bevorzugt am Ende der Trocknung, ein Wasserzugabeelement angeordnet ist, wobei das Wasserzugabeelement Mittel zur Erhaltung eines Klimas mit hoher Temperatur aufweist.

10. Vorrichtung nach Patentanspruch 9,
dadurch gekennzeichnet,
dass je ein Wasserzugabeelement am Anfang und am Ende der Endtrocknung angeordnet ist.

11. Vorrichtung nach Patentanspruch 9,
dadurch gekennzeichnet,
dass im Bereich der Endtrocknung zwei oder mehrere Wasserzugabeelemente angeordnet werden.

## Claims

1. Process for the form stabilization of pasta, whereto the dough with a moisture content of nearly 28% - 35% is preshaped, heated up to higher temperatures and dryed on less than 13%,
characterised in that, that in a warm status of the material at the end (zone) of the drying the water content of a outer layer, related to the whole material is raised at least 0,1%, with a maximum of 2%, preferably 0,4% - 1,2% by the addition of water on the surface.

2. Process in accordance with patent claim 1, characterised in that the addition of water is carried out at a temperature of the material preferably about 45°C and most preferably about 75°C.

3. Process in accordance with the patent claims 1 or 2, characterised in that long pasta is heated up to about 80°C in less than 1 hour and dried in 2 - 4 hours at high temperature.

4. Process in accordance with the patent claims 1 - 3, characterised in that short pasta is heated up to about 80°C in less than 30 minutes and dried in 1 - 3 hours at high temperature.

5. Process in accordance with the patent claims 1 - 4, characterised in that the addition of water is carried out over a period of 1 - 30 minutes, preferably 5 - 10 minutes.

6. Process in accordance with the patent claim 1, characterised in that the addition of water is carried out before the end of the drying at less than 18% moisture of the material.

7. Process in accordance with the patent claim 1, characterised in that the material is moistured up after the main drying, at a moisture of less than 15% during a period of 5 - 10 minutes by water addition on the surface of the material.

8. Process in accordance with the patent claim 1, characterised in that the addition of water is carried out by vapour or fog of water by recycled air, whereto preferably the climate at int... in the zone of water addition is about 80% relative moisture at a temperature of about 60°C.

9. Device for the form stabilization of pasta, with a dough press, a continuous dryer with element- or zonewise controlable climate, characterised in that, that in the end of the drying preferbly on the end of the drying an element for the addition of water is arranged, whereto the element for the addition of water comprising means for supporting a climate with high temperature.

10. Device in accordance with the patent claim 9, characterised in that one element for the addition of water is arranged on the beginnung and on the end of the end (final) drying.

11. Device in accordance with the patent claim 9, characterised in that in the area of the end drying two or more elements for the addition of water are arranged.

## Revendications

1. Méthode pour stabiliser la forme de pâtes alimentaires, dans laquelle la denrée faite de pâtes d'un teneur en eau de 28% - 35% est moulée par compression, portée à des températures plus élevées et séchée à une valeur de moins de 13%,
**caracterisée par le fait que**
la teneur en eau de la couche extérieure se référant à la denrée entière en un état encore chaud est augmentée dans la zone finale du séchage à 0,1% au minimum, à 2% au maximum, préférentiellement à 0,4% - 1,2%, par l'addition d'eau superficielle, et que la température de la denrée est abaissée immédiatement après l'addition d'eau à une valeur d'au dessous de 60°, préférentiellement au dessous de 30°C, et que la température du climat entourant la denrée est abaissée pour créer un climat d'humidiation.

2. Méthode selon la revendication 1,
**caracterisée par le fait que**
l'addition d'eau est effectuée à une température de la denrée de préférentiellement au dessus de 45°C, particulièrement préférablement au dessus de 75°C.

3. Méthode selon la revendication 1 ou 2,
**caracterisée par le fait que**
des pâtes longues sont chauffées en moins d'une heure à plus de 80°C et qu'elles sont séchées en 2 - 4 heures à une température élevée.

4. Méthode selon la revendication 1 ou 3,
**caracterisée par le fait que**
des pâtes courtes sont chauffées en moins de 30 minutes à plus de 80°C et qu'elles sont séchées en 1 - 3 heures à une température élevée.

5. Méthode selon la revendication 1 ou 4,
**caracterisée par le fait que**
l'addition d'eau est effectuée pendant une période de temps de 1 minute à 30 minutes, préférentiellement de 5 - 10 minutes.

6. Méthode selon la revendication 1,
**caracterisée par le fait que**
l'addition d'eau est effectuée avant le séchage final à une humidité de la denrée de moins de 18%.

7. Méthode selon la revendication 1,
**caracterisée par le fait que**
de l'eau est ajoutée à la surface de la denrée après le séchage principal pendant 5 - 10 minutes à une humidité de la denrée d'au dessous de 15%.

8. Méthode selon la revendication 1,
**caracterisée par le fait que**
l'addition d'eau est effectuée par vapeur d'eau ou du brouillard d'eau au moyen d'air de circulation, le climat à l'entrée dans la zone de l'addition d'eau se montant préférentiellement à plus de 80% h.r. (humidité relative) à une température d'au dessus de 60°C.

9. Dispositif pour stabiliser la forme de pâtes alimentaires, comprenant une presse de pâtes, un sécheur continu, à climat controlé dans des éléments ou zones individuels,
**caracterisé par le fait que**
dans le séchage final, préférentiellement à la fin du séchage, un élément d'addition d'eau est disposé, l'élément pour l'addition d'eau comprenant des moyens pour maintenir un climat d'une température élevée.

10. Dispositif selon la revendication 9,
**caracterisé par le fait qu'**
un élément d'addition d'eau respectif est disposé au début et à la fin du séchage final.

11. Dispositif selon la revendication 9,
**caracterisé par le fait qu'**
à la zone du séchage final deux ou une pluralité d'éléments d'addition d'eau sont disposés.
